Europäisches Patentamt

European Patent Office

Office européen des brevets

(11) Publication number: **0 230 142 B1**

## EUROPEAN PATENT SPECIFICATION

(45) Date of publication of the patent specification:
**31.10.90**

(21) Application number: **86310146.5**

(22) Date of filing: **24.12.86**

(51) Int. Cl.⁵: **B29D 30/54**, B05B 13/02

(54) **Apparatus for applying adhesive to buffed tyre for retreading.**

(30) Priority: **28.12.85 JP 297925/85**

(43) Date of publication of application:
**29.07.87 Bulletin 87/31**

(45) Publication of the grant of the patent:
**31.10.90 Bulletin 90/44**

(84) Designated Contracting States:
**DE FR GB IT**

(56) References cited:
**DE-A- 2 057 103**
**GB-A- 806 495**
**US-A- 2 690 207**
**US-A- 2 908 247**
**US-A- 4 407 220**

(73) Proprietor: **SUMITOMO RUBBER INDUSTRIES LIMITED,
No. 1-1, Tsutsui-cho 1-chome, Chuo-ku Kobe-shi
Hyogo 651(JP)**

(72) Inventor: **Nakahama, Kozo, 2-40 Nishiochiai 7-Chome
Suma-ku, Kobe-shi Hyogo-ken(JP)**
Inventor: **Miki, Rikio, 471-4 Kamatam Hirihata-ku,
Himeji-shi Hyogo-ken(JP)**
Inventor: **Suzuki, Akiomi, 9-1-4-404 Ryugadai 1-Chome
Suma-ku, Kobe-shi Hyogo-ken(JP)**

(74) Representative: **Stewart, Charles Geoffrey, SP TYRES
UK LIMITED Tyre Technical Division, Fort Dunlop
Erdington Birmingham B24 9QT(GB)**

ACTORUM AG

## Description

The present invention relates to an apparatus for applying adhesive to a buffed tyre for retreading according to the preamble of claim 1, and more particularly, to an apparatus for applying adhesive to a buffed crown surface of a worn tyre prior to the application of tread strip to the buffed tyre for retreading.

Generally in retreading a tyre, the worn tread is removed then the tyre crown is buffed or ground with a buff-grinder of buff-machine. Next a rubber-based adhesive or rubber cement is applied to the buffed outer surface of the tyre and a new tread strip is wound around the adhesive-coated tyre.

The above mentioned application of adhesive has hitherto been performed by hand using a stand with a pair of rotatable rollers for supporting the tyre and a hand spray gun.

It has also been proposed in US Patent 4 407 220, which discloses the features of the preamble of claim 1, to provide a cement spraying machine comprising a tyre support and rotating device formed of two rotation rollers to support the tyre and an elevating member mounted on a vertical member and movable up and down to allow vertical movement of the tyre bringing it close to a spaying head.

Such devices however require handling of the tyre and since tyres generally weigh 35–40 Kgms and, after coating with adhesive, handling of the tyre becomes very troublesome since the adhesive sticks to clothes and the like, the devices have not been satisfactory. A further disadvantage from the prior art systems is from the point of view of the workers' health since the workers may inhale the vapour of the organic solvents from the adhesive.

It is an object of the present invention to overcome these disadvantages.

According to the present invention an apparatus for applying adhesive to a buffed tyre for retreading comprises a spraying device, a tyre rotating device comprising two tyre rotation rollers supported on an elevating member mounted on a vertical member and movable up and down thereon characterised by the vertical member being pivotally mounted on a base and movable by means from a vertical to a nonvertical position so that when the tyre is sprayed and it is to be reloaded on to a conveyor hook the rollers and elevating member move downwards and then the vertical member carrying them moves into its nonvertical position to leave the conveyor path clear.

Further embodiments of the invention are defined in the features of the dependent claims.

One embodiment of the apparatus of the present invention is now described by way of example only, with reference to accompanying drawings in which:

Figure 1 is a layout view.
Figures 2 and 3 are a plan view and side view of the tyre loading device,
Figure 4 is a sectional view along line IV–IV in Figure 2,

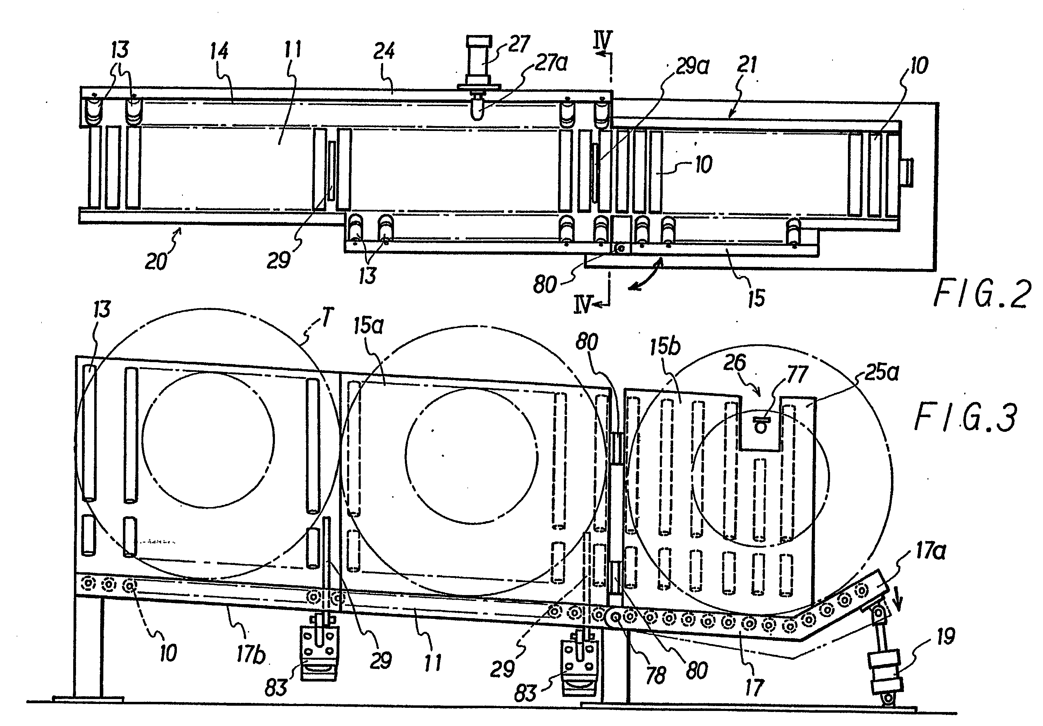

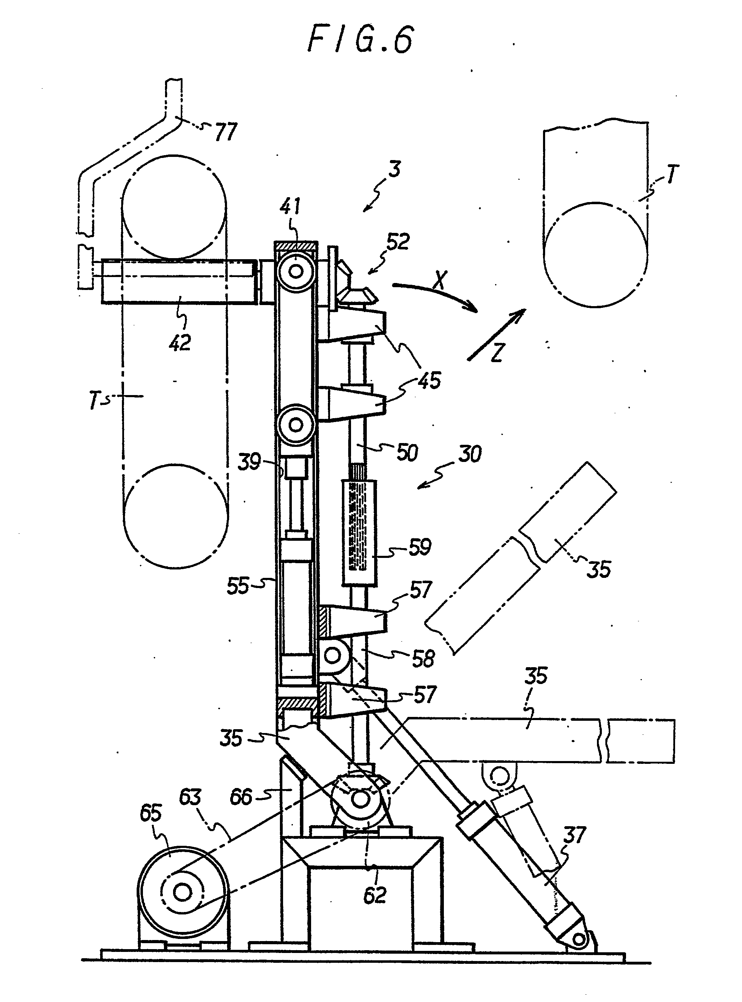

Figures 2 and 6 are a front view and a partially cutaway side view of the tyre rotating device, and

Figure 7 is a front view showing the conveyor hook.

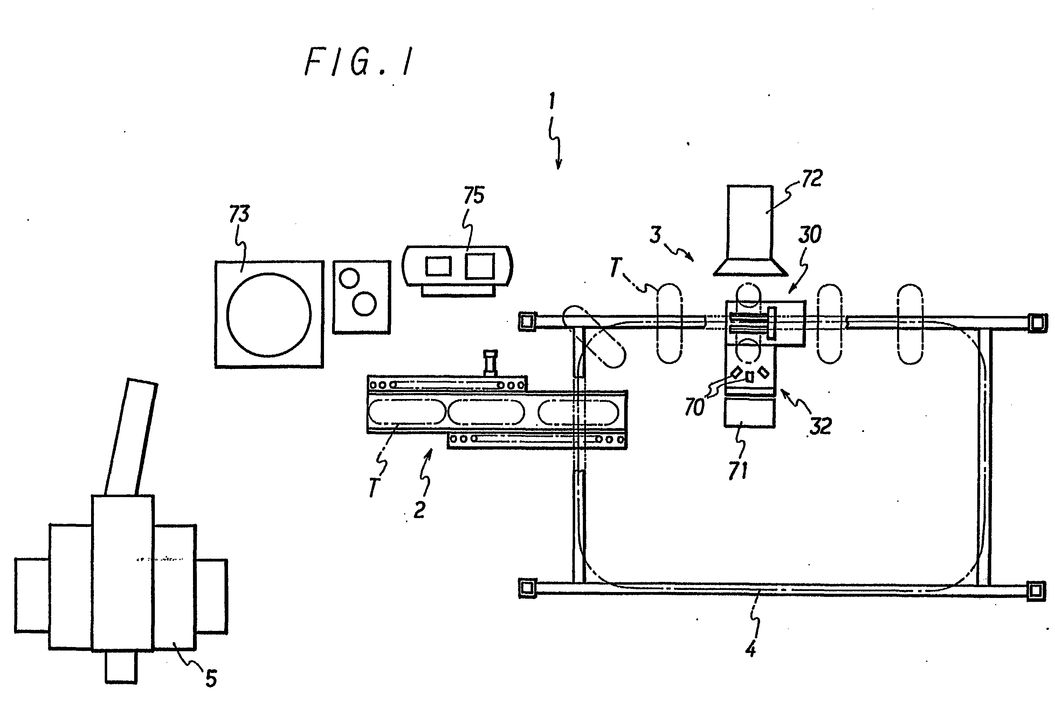

As shown in Fig.1, the apparatus 1 for adhesive application comprises a tyre-loading device 2, an adhesive applicator 3 and a conveyor 4, and is arranged adjacent to a buff-grinder 5.

The tyre-loading device 2 comprises as shown in Figs 2 to 4 a base 11 and a pair of sidewalls 14, 15. The base 11 has a series of horizontal rollers 10 rotatably supported upon a base frame 17, and is slightly inclined. The pair of sidewalls 14, 15 stand on opposite sides of the base 11 and each side wall 14, 15 has a series of vertical rollers 13 rotatably supported in a vertical frame 25. Each roller 13 comprises a long roller and a short roller, and these rollers are separately supported on shafts.

An outlet portion 17a of the base frame 17 is hinged to an end of a static portion 17b of the base frame 17 by means of a pin 78 so that the outlet portion 17a can be rotated around the pin 78 by an air cylinder 19 to change the angle of the outlet portion 17a in the front-to-rear direction.

Thus the outlet portion 17a can hold a buffed tyre rolled down from the inlet when the outlet portion 17a is raised up to a small angle as shown in Fig 3, and the tyre is hung up on a hook 77 positioned after the conveyor 4 by changing downwardly the angle thereof after the hook 77 is inserted in the inner portion of the tyre.

The side-wall 14 which is arranged at the back, extends from an end of an inlet 20 to the middle portion of the tyre-loading device 2, and is shorter an outlet 21 portion by a length little lower than the diameter of a tyre. Also the other side wall 15 which is at the front is shorter at the inlet 20 portion by a length a little lower than the diameter of the tyre. It extends to a position near the rear of the tyre loading device 2.

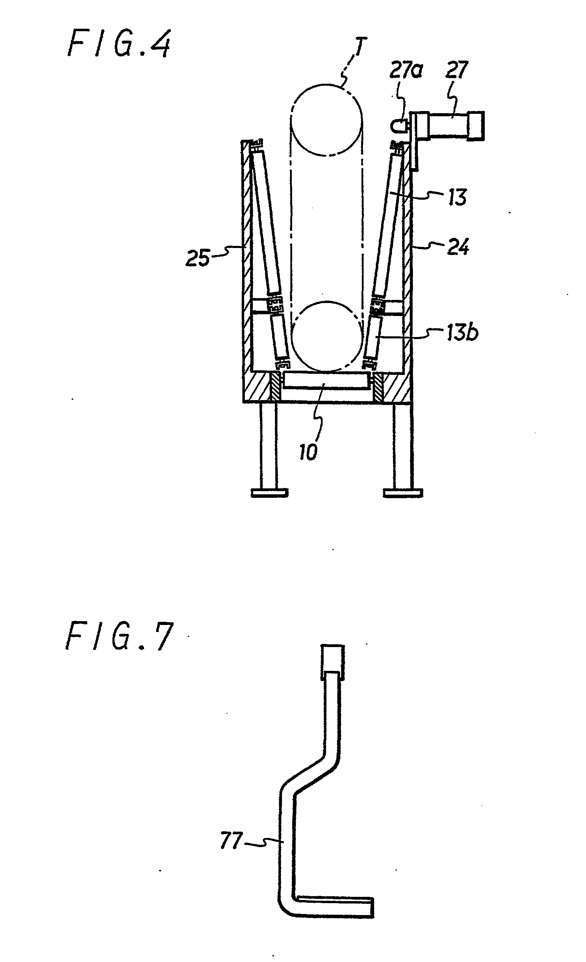

The above mentioned two sets of vertical rollers 13 are arranged such that the series of the vertical rollers 13 are slightly inclined to one another (see Fig.4).

The side wall 15 is separated into two portions i.e. a front portion 15a and a rear portion 15b, and the vertical frame 25 of the rear portion 15b is formed with a cut-away portion 26 which is a path way for hooks 77 of the conveyor 4 mentioned after.

Further, the rear portion 15b can be removed to allow smaller tyres, e.g. light truck tyre hung on the hook of the overhead conveyor pass through the outlet 21 of the tyre-loading device 2. The smaller tyres are manually hung up on the conveyor 4 at a position before the tyre loading device 2, without using the tyre-loading device 2.

The rear portion 15b is also hinged to the front portion 15a by means of hinges 80 or the like so that the rear portion 15b can be rotated by 180° to provide a passage way for the light truck tyres.

In Figs 2 and 4, numeral 27 shows an air cylinder of a pusher 27a for pushing the upper portion of the tyre which has fallen against the side wall 14 towards the side wall 15 side, and numerals 29 and 29a are stoppers for temporarily stopping the tyre at suitable positions on the horizontal rollers 10.

Each stopper 29, 29a is constructed as a plate or the like able to project out of a gap between the horizontal rollers 10 and being moved into the gap by means of an air cylinder 83.

As shown in Fig.1, an adhesive applicator 3 is provided together with a tyre rotating device 30 and a spraying device 32.

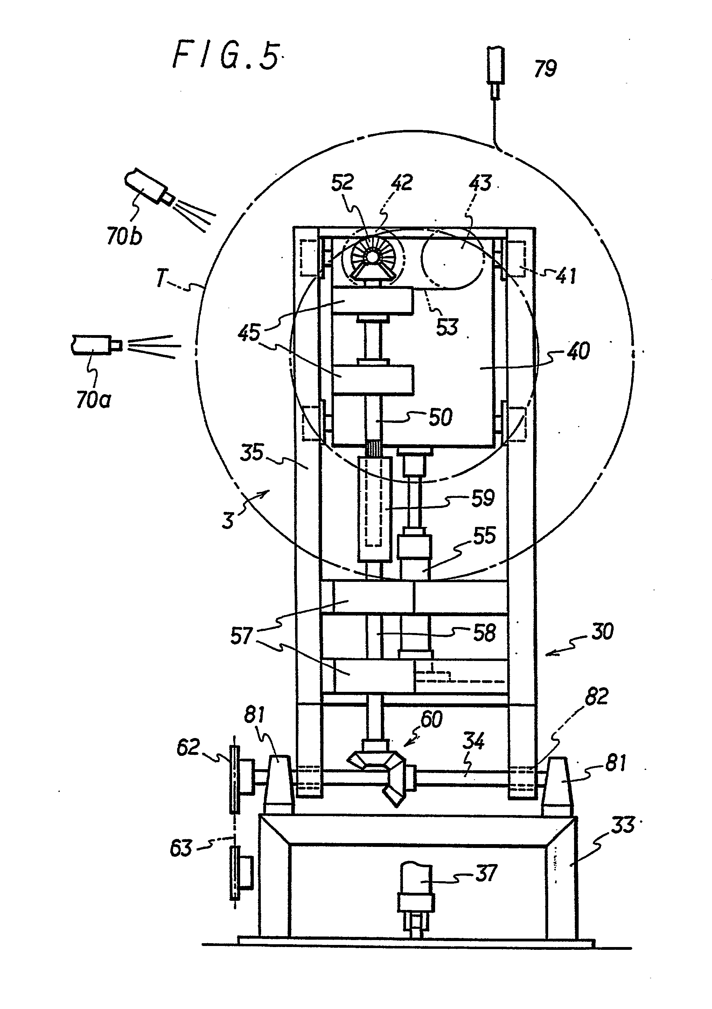

The tyre rotating device 30 is, as shown in Figs. 5 and 6, provided with a base 33 and vertical frame 35 rotatably connected to the base 33 by means of a shaft 34 so that the vertical frame 35 can be lowered to a horizontal position as shown by one-dot-chain lines in Fig.6 towards the back by means of an air cylinder 37. In Fig.5, numeral 82 is a bearing. However, the vertical frame 35 may be constructed so it may be lowered to a small angle to the position shown with two-dot-chain lines in Fig.6.

Although in Fig.5 and 6, the vertical frame 35 and the base 33 are rotatably connected with a shaft 34 which can transmit rotational power as mentioned later, the present invention is not limited to such an embodiment. For example, hinges, pins, or the like arranged concentrically with the shaft 34 can be employed as a means for rotatably connecting the vertical frame 35 to the base 33. When the above mentioned pins or the like are employed, the shaft 34 which is generally concentric with the pins or the like serves only as a power transmitting member.

The vertical frame 35 has guide grooves 39 at the inner sides thereof, and guide rollers 41 of an elevating frame 40 are inserted into the guide grooves 39.

A pair of rollers 42, 43 are rotatably attached to the upper and front side of the elevating frame 40 to provide supporting members. This pair of rollers 42, 43 project horizotally from the front surface of the elevating frame 40 and are parallel to it.

Also a pair of bearings 45 which are pillow block units attached to the back surface of the elevating frame 40. A rotary shaft 50 is rotatably supported in the bearings 45, so that rotational power is transmitted to the roller 42 through a set of bevel gears 52 provided on the end of the rotary shaft 50.

The rollers 42 & 43 are connected by a pair of sprockets and an endless chain 53 so that both rollers 42, 43 rotate in the same direction.

A rod of an air cylinder 55 is connected with a lower portion of the elevating frame 40, so that the elevating frame 40 can be lifted or lowered. The lower end of the rotary shaft 50 is connected to a base shaft 58 rotatably supported in a pair of bearings 57 through a spline-joint 59, so that the combined length of the rotary shaft 50 and the base shaft 58 can be changed without loosing transmission of rotational power.

The lower end of the base shaft 58 is operatively connected to the shaft 34 by a bevel gear mechanism 60, so that driving power is transmitted from the shaft 34 to the base shaft 58. The shaft 34 is provided with a sprocket 62 on an end thereof, so that the driving power from an electric motor 65, or the like, is transmitted to the shaft 34 through an endless chain 63. In Fig.6, numeral 66 shows a stopper for locating the vertical frame 35.

As shown in Fig 5, the spraying device 32 more preferably comprises a number of spray units 70a, 70b having different numbers of spray guns which are mounted on the adhesive-applicator 3, thus a suitable spray unit can be selected in accordance with the size of the tyre mounted on the adhesive-applicator 3. For example, a spray unit 70a having three spray guns (70 in Fig.1) is used for bus or truck tyres, and another spray unit 70b having two spray guns is used for light truck tyres.

In Fig.5, the numeral 79 shows a detecting device or sensor for detecting the size of the mounted tyre. The sensor 79 is lowered towards the rotating tyre, for example, by means of an air cylinder, and a needle of the sensor 79 detects the size of the tyre by means of the amount of displacement of the piston in the sensor 79 and this then transmits a signal to a suitable spray unit 70a, 70b. The spray guns 70 are fed wth rubber-based adhesive from a pump 71 in Fig.1.

As shown in Fig 1, a suction duct 72 is arranged at a position opposite to the spraying device 32 in relation to the tyre rotating device 30 mentioned above. Further, an air compressor 75 is adjacent to a dust collector 73 for the buff grinder 5, so that compressed air is supplied to the above-mentioned air cylinders and the spray guns 70.

A conveyor shown in Fig.1, is an overhead type trolley conveyor 4 with a loop-like path way passing over the above mentioned tyre-loading device 2 and the adhesive applicator 3. The trolley conveyor 4 intermittenlly moves only by a half pitch, where one pitch (e.g. 1200mm) is determined as a distance between hocks 77, so that the buffed tyre can be rolled down to the outlet for loading.

Hereinafter, functions and operations of the apparatus 1 for adhesive application are explained. At first, when a tyre T which has a buffed crown portion is fed to the inlet 20 of the tyre loading device 2 and the stopper 29 is released the tyre T resting against the side wall 14 rolls down to the centre position of the tyre laoding device 2 since the base portion 11 is inclined at an angle, and then the tyre T is stopped by the stopper 29a. Thereafter, the air cylinder 27 of the pusher 27a acts to push the tyre T towards the opposite side wall 15.

Next, when the stopper 29a is released, the tyre T rolls down to the outlet 21 of the tyre loading device 2 and is stopped by means of the raised outlet portion 17a of the base frame 17.

Then, one of the hooks 77 (see Fig.7 ) of the trolley conveyor 4 approaches and inserts its lateral rod situated at a botton portion thereof into the inner portion of the tyre T.

Then the aircylinder 19 contracts to lower the outlet portion 17a of the base frame 17 around the pin 78, and at the same time, the tyre T is hung by the hook 77 and taken off. After the conveyor 4 is moved by a half pitch, the air cylinder 19 is returned to an original position.

As mentioned above, tyres T are transfered one after another to the adhesive applicator 3 side.

When a tyre T on the conveyor 4 reaches a work station of the adhesive applicator 3, a limit switch (not shown) senses the existance of the tyre T, and the vertical frame 35 which was previously lowered into a horizontal position is raised up to a vertical state due to the operaton of the air cylinder 37, whereby the rollers 42, 43 are inserted into the inside of the tyre T hung up by the hook 77.

Next the air cylinder 55 expands to lift the elevating frame 40, the electric motor 65 begins to rotate, and the rollers 42, 43 are rotated.

Accordingly the tyre T is taken up from the hook 77, and is held and r tated by the rollers 42, 43. Then, the sensor 79 for detecting the tyre size descends to contact with the rotating tyre T, determines the tyre size, e.g either a truck or light truck tyre, and transmits the signal to a suitable spray unit 70a, 70b.

Thereafter, the spray guns 70 act to apply the rubber based adhesive to the outer peripherals surface of the buffed tyre T. The rotation of the tyre T is preferably two turns in twelve seconds, during the application of the adhesive.

When the application of the adhesive is completed, the rotation of the rollers 42, 43 stops and the elevating frame 40 decends. Then the tyre T is again suspended on the hook 77 of the conveyor 4.

Thereafter, as shown in Fig.6, the vertical frame 35 is lowered in the direction of Arrow X to its original horizontal position, and the conveyor 4 loaded with the adhesive-coated tyre T mooves up in the direction of Arrow Z.

The tyre T applied with the adhesive is dried during conveyance by means of the trolley conveyor 4, and finally is taken out at a suitable discharge position in a loop of the conveyor path.

The spray guns e.g. three guns, are arranged in a fan shaped arrangement so as to face the tyre T, and are supported so that the distance to the tyre, the directions and the height of the spray guns 70 can be easily adjusted.

In addition, the above mentioned apparatus is controlled with a sequencer, e.g a programmable logic controller. Though, air cylinders are employed in the above mentioned apparatus, another linear or rotary actuator, e.g. hydraulic actuator such as hydraulic cylinder, air motor electric motor can be employed as drivng devices for driving the vertical frame 35, the elevating frame 40, or the like.

Further, if desired, the elevating frame 40 can be driven with the air cylinder 37 by connecting the top end of the rod of the cylinder 37 with the elevating frame 40.

As mentioned above, the apparatus for applying adhesive of the present invention can reduce much labor, since each operation is automatically performed, and the work is easy since there is no necessity for manually handling and carrying tyres over a long distance. Further since the tyre is automatically adhesive coated with the spray guns, the work becomes much more efficient, and defects such as uneven coating are reduced.

In addition, since it is not necessary for workers to stay in an atmosphere of organic solvent, the problem of labour's health is solved.

Though, a few embodiments have been explained with reference to the accompanying drawings, it is to be understood that the present invention is not limited to the embodiment mentioned above, and various changes and modifications may be made in the invention without departing from the spirit and scope thereof.

## Claims

1. An apparatus for applying adhesive to a buffed tyre for retreading comprising a spraying device (32), a tyre rotating device (30) comprising two tyre rotation rollers (42, 43) supported on an elevating member (40) mounted on a vertical member (35) and movable up and down thereon characterised by the vertical member (35) being pivotally mounted on a base (33) and movable by means (37) from a vertical to a nonvertical position so that when the tyre is sprayed and it is to be reloaded on to a conveyor hook (77) the rollers (42, 43) and elevating member (40) move downwards and then the vertical member (35) carrying them moves into its nonvertical position to leave the conveyor path clear.

2. The apparatus of claim 1, characterised by the tyre rotating device comprising at least two rotatable supporting members (42, 43) projecting in a horizontal direction so that said supporting members (42, 43) support said inner peripheral surface of said tyre, and at least one supporting member (42) is driven to rotate the tyre.

3. The apparatus of Claim 2 characterised in that the tyre rotating device (30) further comprises a vertically extending guide member (35) and an elevating member (40) which is movable in upper and lower directions along said guide member (35) and said supporting members (42,43) are rotatably mounted on said elevating member (40).

4. The apparatus of Claim 3, characterised in that said guide member (35) is pivotable connected to a base (33) so that said guide member (35) may rotate so as to move downwards in a direction away from the support position.

5. The apparatus of Claim 1, 2, 3 or 4 characterised by the spraying device (32) comprises at least one spray unit (70a, 70b) having a plurality of spray guns arranged in a direction across the width of the tyre to be treated.

6. The apparatus of Claim 5, characterised by the spraying device (30) comprises at least two spray units, (70a, 70b) the number and arrangement of said spray guns of each spray unit being determined in accordance with the size of said tyre to be retreaded, so that a suitable spray unit is selectively driven according to an object tyre.

7. The apparatus of claim 5 or 6 characterised by a tyre sensor (79) arranged adjacent to the tyre, means to move said sensor (79) to contact the tyre, and means to contact the spray unit (30) according to the tyre size sensed.

8. The apparatus of any one of claims 1 - 7 further comprising a conveyor (4) for supplying said buffed tyre to said tyre rotating device (30) and for receiving adhesive coated tyre from said rotating device (30), and a tyre loading device (2) for loading said conveyor (4) with said buffed tyre to be coated.

9. The apparatus of Claim 8, characterised by the said tyre loading device (2) comprises an inlet, and outlet (17a) a base portion (11) downwardly slightly inclined from said inlet to said outlet, a pair of side wall portions, (14,15) standing at both sides of said base portion (11), and an end of said outlet (17) is movable so that the inclination angle thereof is changeable.

10. The apparatus of any one of claims 1 - 4 characterised by said conveyor has over head trolley conveyor having a plurality of hooks (77) for hanging said tyres.

## Patentansprüche

1. Vorrichtung zum Aufbringen von Kleber auf einen aufgerauhten Reifen zum Neubesohlen, mit einem Sprühgerät (32), einem Reifen-Drehgerät (30) mit zwei Reifen-Drehwalzen (42, 43), die an einem Anhebeglied (40) abgestützt sind, welches an einem Vertikalglied (35) angebracht und daran auf- und abwärts bewegbar ist, dadurch gekennzeichnet, daß das Vertikalglied (35) schwenkbar an einem Grundteil (33) angebracht und durch Mittel (37) von einer vertikalen zu einer nicht vertikalen Lage bewegbar ist, so daß dann, wenn der Reifen besprüht ist und auf einen Förderhaken (77) umgeladen werden soll, die Walzen (42, 43) und das Hebeglied (40) sich abwärts bewegen und dann das sie tragende Vertikalglied (35) sich in seine nicht vertikale Lage bewegt, um den Förderweg freizugeben.

2. Vorrichtung nach Anspruch 1, dadurch gekennzeichnet, daß das Reifen-Drehgerät mindestens zwei drehbare Stützglieder (42, 43) umfaßt, die in einer horizontalen Richtung vorstehen, so daß die Stützglieder (42, 43) die Innenumfangsfläche des Reifens abstützen und daß mindestens ein Stützglied (42) zum Drehen des Reifens angetrieben ist.

3. Vorrichtung nach Anspruch 2, dadurch gekennzeichnet, daß das Reifen-Drehgerät (30) weiter ein sich vertikal erstreckendes Führungsglied (35) und ein Hebeglied (40) umfaßt, das in Aufwärts- und Abwärtsrichtung längs des Führungsgliedes (35) bewegbar ist, und daß die Stützglieder (42, 43) an dem Hebeglied (40) drehbar befestigt sind.

4. Vorrichtung nach Anspruch 3, dadurch gekennzeichnet, daß das Führungsglied (35) schwenkbar mit einem Grundteil (33) so verbunden ist, daß das Führungsglied (35) sich drehen kann, um sich abwärts in eine Richtung von der Stützlage weg zu bewegen.

5. Vorrichtung nach Anspruch 1, 2, 3 oder 4, dadurch gekennzeichnet, daß das Sprühgerät (32) mindestens eine Sprüheinheit (70a, 70b) mit einer Vielzahl von Sprühpistolen umfaßt, die in einer Richtung quer zur Breite des zu behandelnden Reifens angeordnet sind.

6. Vorrichtung nach Anspruch 5, dadurch gekennzeichnet, daß das Sprühgerät (30) mindestens zwei Sprüheinheiten (70a, 70b) umfaßt, wobei die Anzahl und Anordnung der Sprühpistolen jeder Sprüheinheit entsprechend der Größe des neu zu besohlenden Reifens bestimmt ist, so daß eine passende Sprüheinheit wahlweise entsprechend dem betreffenden Reifen angetrieben wird.

7. Vorrichtung nach Anspruch 5 oder 6, dadurch gekennzeichnet, daß ein Reifensensor (79) benachbart zum Reifen angeordnet ist, daß Mittel zum Bewegen des Sensors (79) zum Kontakt mit dem Reifen vorgesehen ist und Mittel zum Kontakt mit der Sprüheinheit (30) entsprechend der durch den Sensor erfaßten Reifengröße.

8. Vorrichtung nach einem der Ansprüche 1 bis 7, weiter mit einem Förderer (4) zum Zuführen des aufgerauhten Reifens zu dem Reifen-Drehgerät (30) und zum Empfangen eines kleberbeschichteten Reifens von dem Drehgerät (30) und mit einem Reifen-Ladegerät (2) zum Beladen des Förderers (4) mit dem zu beschichtenden aufgerauhten Reifen.

9. Vorrichtung nach Anspruch 8, dadurch gekennzeichnet, daß das Reifen-Ladegerät (2) einen Einlaß, einen Auslaß (17a) und einen Grundabschnitt (11) umfaßt, der leicht von dem Einlaß zu dem Auslaß nach unten geneigt ist, zwei Seitenwandabschnitte (14, 15), die zu beiden Seiten des Grundabschnitts (11) stehen, und daß ein Ende des Auslasses (17) so bewegbar ist, daß dessen Neigungswinkel geändert werden kann.

10. Vorrichtung nach einem der Ansprüche 1 bis 4, dadurch gekennzeichnet, daß der Förderer Überkopf-Förderwägen besitzt mit einer Vielzahl von Haken (77) zum Anhängen der Reifen.

## Revendications

1. Appareil d'application d'un adhésif sur un pneumatique meulé au cours de son rechapage, comprenant un dispositif de pulvérisation (32), un dispositif (30) d'entraînement de pneumatique en rotation comprenant deux rouleaux (42, 43) d'entraînement en rotation du pneumatique, supportés sur un organe élévateur (40) monté sur un organe vertical (35) et mobile vers le haut et vers le bas sur ce dernier, caractérisé en ce que l'organe vertical (35) est monté sous forme articulée sur une base (33) et peut être déplacé par un dispositif (37) d'une position verticale à une position non verticale de manière que, lorsque le pneumatique subit une pulvérisation et doit être replacé sur un crochet (77) de transporteur, les rouleaux (42, 43) et l'organe élévateur (40) descendent et l'organe vertical (35) les portant se déplace alors vers sa position non verticale en dégageant le trajet du transporteur.

2. Appareil selon la revendication 1, caractérisé en ce que le dispositif d'entraînement en rotation de pneumatique comprend au moins deux organes rotatifs de support (42, 43) qui dépassent en direction horizontale afin que les organes de support (42, 43) supportent la surface périphérique interne du pneumatique, et un organe de support au moins (42) est entraîné afin qu'il fasse tourner le pneumatique.

3. Appareil selon la revendication 2, caractérisé en ce que le dispositif (30) d'entraînement en rotation de pneumatique comporte en outre un organe vertical de guidage (35) et un organe élévateur (40) qui est mobile vers le haut et vers le bas le long de l'organe de guidage (35), et les organes de support (42, 43) sont montés sur l'organe élévateur (40) afin qu'ils puissent tourner.

4. Appareil selon la revendication 3, caractérisé en ce que l'organe de guidage (35) est raccordé afin qu'il puisse pivoter sur une base (33) si bien que l'organe de guidage (35) peut tourner afin qu'il se déplace vers le bas en s'écartant de la position de support.

5. Appareil selon la revendication 1, 2, 3 ou 4, caractérisé en ce que le dispositif de pulvérisation (32) comporte au moins un ensemble de pulvérisation (70a, 70b) ayant plusieurs pistes de pulvérisation disposées en direction transversale à la largeur du pneumatique à traiter.

6. Appareil selon la revendication 5, caractérisé en ce que le dispositif de pulvérisation (30) comporte au moins deux ensembles de pulvérisation (70a, 70b), le nombre et la disposition des pistolets de pulvérisation de chaque ensemble de pulvérisation étant déterminés d'après la taille du pneumatique à rechaper, si bien qu'un ensemble convenable de pulvérisation est commandé sélectivement en fonction du pneumatique considéré.

7. Appareil selon la revendication 5 ou 6, caractérisé par un capteur (79) de pneumatique placé près du pneumatique, un dispositif destiné à déplacer le capteur (79) afin qu'il vienne au contact du pneumatique, et un dispositif destiné à commander l'ensemble de pulvérisation (30) en fonction de la taille détectée du pneumatique.

8. Appareil selon l'une quelconque des revendications 1 à 7, comprenant en outre un transporteur (4) destiné à transmettre le pneumatique meulé au dispositif (30) d'entraînement en rotation de pneumatique et à recevoir un pneumatique revêtu d'adhésif provenant du dispositif (30) d'entraînement en rotation, et un dispositif (2) de chargement de pneumatique destiné à charger le pneumatique meulé à revêtir sur le transporteur (4).

9. Appareil selon la revendication 8, caractérisé en ce que le dispositif (2) de chargement de pneumatique comporte en entrée et une sortie (17a), une partie de base (11) légèrement inclinée vers le bas de l'entrée vers la sortie, et deux parties de paroi latérale (14, 15) placées de part et d'autre de la partie de base (11), et une extrémité de la sortie (17) est mobile afin que l'angle d'inclinaison puisse être modifié.

10. Appareil selon l'une quelconque des revendications 1 à 4, caractérisé en ce que le transporteur comporte un transporteur à chariots suspendus ayant plusieurs crochets (77) destinés à supporter les pneumatiques.

FIG. 1

FIG.2

FIG.3

EP 0 230 142 B1

FIG.4

FIG.7

# FIG.5

# FIG.6